# EUROPEAN PATENT SPECIFICATION

(11) **EP 4 292 333 B1**
(45) Date of publication and mention of the grant of the patent: **17.06.2026**
(21) Application number: 21834925.6
(22) Date of filing: 17.12.2021
(51) Int. Cl.: H04W 40/16, H04W 40/20, H04W 40/24, H04W 4/70, H04W 84/18, H04W 88/06, G05D 1/00, H04W 4/80, A01B 69/00, H04L 49/90

(54) **DATA EXCHANGE WITHIN A ROBOTIC SYSTEM USING MOBILE ROBOTS REPRESENTING A COMMUNICATION CHAIN**
DATENAUSTAUSCH INNERHALB EINES ROBOTERSYSTEMS MIT MOBILEN ROBOTERN, DIE EINE KOMMUNIKATIONSKETTE REPRÄSENTIEREN
ÉCHANGE DE DONNÉES DANS UN SYSTÈME ROBOTIQUE UTILISANT DES ROBOTS MOBILES REPRÉSENTANT UNE CHAÎNE DE COMMUNICATION

(30) Priority: 09.02.2021 GB 202101748
(43) Date of publication of application: 20.12.2023
(73) Proprietor: AGCO International GmbH, 8212 Neuhausen am Rheinfall (CH)
(72) Inventor: FERNANDEZ GUZMANN, Benjamin Fernando, 87616 Marktoberdorf (DE); BOCK-KRAUSEN, Leopold, 87616 Marktoberdorf (DE)
(74) Representative: AGCO Intellectual Property Department
(86) International application number: PCT/IB2021/061922
(87) International publication number: WO 2022/172077

(56) References cited:
- WO-A1-2014/058229
- US-A1- 2015 332 523
- HENKEL D ET AL: "Delay-tolerant communication using mobile robotic helper nodes", MODELING AND OPTIMIZATION IN MOBILE, AD HOC, AND WIRELESS NETWORKS AND WORKSHOPS, 2008. WIOPT 2008. 6TH INTERNATIONAL SYMPOSIUM ON, IEEE, PISCATAWAY, NJ, USA, 1 April 2008 (2008-04-01), pages 657 - 666, XP031295958, ISBN: 978-963-9799-18-9

## Description

### FIELD OF THE INVENTION

The invention relates to a robotic system comprising at least three robotic units and an exchange of data between the at least three robotic units.

### BACKGROUND

AU 2018204155 A1 discloses an autonomous agricultural vehicle and a data transfer station. The data transfer station comprises a first communications device for transfer of large data files at a high data transfer rate and a second communications device adapted for long range communication. The agricultural vehicle proceeds to the data transfer station when the data storage of the agricultural vehicle is full or nearly full and the vehicle needs to transfer data to the data transfer station in order to free up memory on the data storage of the agricultural vehicle.

Due to the fact that the vehicle will proceed to the data transfer station based on a capacity of the data storage of the agricultural vehicle, the field operation of the vehicle will be interrupted and the return to the data transfer station will lead to a more intense soil compaction.

US 2015/0168560 A1 discloses a repeater system for an autonomous agricultural vehicle to send a RTK correction information to another autonomous agricultural vehicle being outside the coverage area of a base station. Thus, the range of the base station can be extended even further for propagating the RTK correction information up to its validity range. However, the repeater functionality is not capable to transfer a huge amount of data between the two agricultural vehicles and / or the base station.

Before a RTK correction information can be propagated from the base station to the agricultural vehicle being outside the coverage area of a base station, another vehicle is needed to be inside the coverage area of the base station for a closed communication chain. According to US 2015/0168560 A1, it is assumed that a communication chain is present without mentioning how a communication chain can be built up.

US 2015/0332523 A1 discloses a communication network for autonomous mobile nodes such as UAV's. In case of a damaged node, the communication may be interrupted. The location of the damaged node may be determined. Another free node may autonomously move to the location of the damaged node and take place of the damaged node to reestablish the communication.

WO 2014/058229 A1 discloses a method for managing a topology of a mobile ad hoc network in which an unmanned unit (e. g. a robot or an UAV) based repeater is moved, disposed or excluded from an ad hoc network to an individual link node on a transmission link to constantly maintain data transmission quality between each node.

Henkel D. et al.: "Delay-tolerant communication using mobile robotic helper nodes", MODELING AND OPTIMIZATION IN MOBILE, AD HOC, AND WIRELESS NETWORKS AND WORKSHOPS, 2008. WIOPT 2008. 6th international symposium on, IEEE, Piscataway, NJ, USA, 1 April 2008 (2008-04-01), pages 657-666, relates to the improvement of the performance of delay tolerant networks. Three communication modes as direct communication, communication through one or more relays and communication via data ferries may be used.

Finally, the capacities of preferred data storages for industrial or agricultural applications, especially for embedded systems or electronic control units (ECU) due to high real time performance requirements, are very limited. But that limitation is contrary to the requirements of agricultural applications which generate a great amount of data to be stored when an operation in the field is performed according to a protocol or recorded by an agricultural vehicle.

### SUMMARY OF THE INVENTION

It is an objective of the invention to provide a robotic system for transferring data, especially a fast transfer of a great amount of data, between a mobile robot and another robotic unit without the need of the mobile robot to return to the robotic unit for the transfer of data and to provide a method to get at least three robotic units connected to build up a communication chain.

The invention is directed to a method for exchanging data within a robotic system according to the claims 1 to 14 and a controller configured to carry out the method according to claim 15.

The robotic system comprises at least three robotic units. Each robotic unit comprises a first communication device with a short range communication reach for exchanging data with each other robotic unit and a data storage. The method for exchanging data within the robotic system comprises the steps:
- Recognizing a necessity of a data transfer for a first robotic unit of the at least three robotic units,
- determining an area of interference of the short range communication reach of the first robotic unit and the short range communication reach of a second robotic unit of the at least three robotic units, the second robotic unit being out of the short range communication reach of the first robotic unit,
- determining a waypoint within the area of interference for a third robotic unit of the at least three robotic units, and
- commanding the third robotic unit to move to the waypoint.

At least one of the robotic units can be an autonomous agricultural robot having a tool to threat an agricultural field, e. g. a seeding unit or a weeding unit. While the robotic unit is operating in the field, the robotic unit can perform its operation according to a protocol and record its operation and save the operational data about the field operation to its buffer. For example, the robotic unit can record the position of each single seed placed in the field and document the seeding by a video stream. Due to the limited storage capacity of the buffer, the buffer can get full of data before the operation finished. The free available buffer space can be monitored continuously to detect the insufficient buffer space and to recognize the necessity of a data transfer for the robotic unit.

The method for exchanging data within the robotic system or separate steps of the method can be carried out by a controller of one of the robotic units. Preferably one of the robotic units is configured as a logistic unit wherein a central controller of the logistic unit is configured to carry out the method. The method can be implemented in a computer program product stored to a computer readable memory being part of the controller.

To avoid a data loss, e. g. due to a buffer overflow, and to keep buffer space available for the completion of the operation, the recorded data about the field operation needs to be backed up to a data storage external from the robotic unit to another robotic unit, preferably a logistic unit, having sufficient data storage capacity, e. g. in terms of a local data storage or a cloud storage. Afterwards, the buffer of the robotic unit can be freed up to provide buffer space for further recordings of the field operation.

A necessity of a data transfer for the robotic unit can also be recognized if any other issue arises, for example a shortcoming of the buffer of the robotic unit, especially a shortcoming preventing a completion of the field operation by the effected robotic unit. Generally, the necessity of a data transfer can arise if data shall be transferred from the buffer of a first robotic unit to a second robotic unit.

As long as the first robotic unit is out of the short range communication reach of the second robotic unit, a data transfer to back up the data of the buffer of the first robotic unit is not possible. To enable a communication between the first and the second robotic unit according to the invention, a third robotic unit can be used to build up a short range communication chain such that the short range communication reach of the third robotic unit covers both the first and the second robotic unit. Then, the third robotic unit can be used as a transmitter to transfer data between the first and the second robotic unit.

To build up the short range communication chain, an appropriate position for the third robotic unit in the field needs to be determined. Such a position can be determined by determining a waypoint for the third robotic unit within an area of interference of the short range communication reach of the first robotic unit and the short range communication reach of a second robotic unit. Predicted that the short range communication reach of the third robotic unit is not smaller than the short range communication reaches of the first and second robotic units, the short range communication chain between the first and second robotic unit will be closed when the third robotic unit approaches the waypoint. Then, the data can be transferred from the first robotic unit to the second robotic unit via the third robotic unit (and vice versa). After the data transfer, the buffer of the first robotic unit can be freed up. In case that the second robotic unit is the logistic unit, the data from the first robotic unit could be transferred to the logistic unit without the need of the first robotic unit to return to the logistic unit.

To get sure that the short range communication reach of the third robotic unit is not too small to cover both the first and second robotic unit when the third robotic unit is located at the waypoint, the method checks whether the first and second robotic unit are coverable by the short range communication reach of the third robotic unit at the waypoint. If the first and second robotic unit are coverable, the third robotic unit will be commanded to move to the waypoint.

If the first and the second robotic unit will be out of the short range communication reach of the third robotic unit at the waypoint, then at least a target area within the short range communication reach of the first and / or of the second robotic unit will be determined.

Generally, the robotic unit determined for the data transfer with the first robotic unit can be any robotic unit of the robotic system other than the first robotic unit. For example, the second robotic unit can be determined for the data transfer. Preferably, the data of the first robotic unit shall be transferred to the logistic unit, wherein the robotic unit representing the logistic unit will be determined as the robotic unit for the data transfer.

If the short range communication reach of the first robotic unit and the short range communication reach of the robotic unit determined for the data transfer are free of an interference, then at least a target area within the short range communication reach of the first robotic unit and / or the robotic unit determined for the data transfer can be determined.

Irrespective whether the target area is covered by the short range communication reach of the second robotic unit or by another robotic unit, the target area is preferably equal or smaller than the area coverable by the short range communication reach of the third robotic unit but not greater. Thus, it can be ensured that at least one robotic unit, e. g. the first robotic unit, will be covered by the third robotic unit when the third robotic unit is located within the corresponding target area. Additionally, the radio gap between the first robotic unit and the robotic unit determined for the data transfer can be reduced by the third robotic unit being part of the short range communication chain.

Preferably, the robotic system comprises at least four robotic units. Then, at least two robotic units can be used to build up the short range communication chain next to the first robotic unit and the robotic unit determined for the data transfer with the first robotic unit. The at least two robotic units can be commanded to move into a target area to get covered by the short range communication reach of the first robotic unit or the robotic unit determined for the data transfer.

Preferably, only one of the at least two robotic units is commanded to move into the same target area. To decide which of the at least two robotic units shall be commanded, the robotic unit being able to reach the target area earlier than the other robotic unit can be determined. For example, the time needed to reach the target area can be calculated for each of the at least two robotic units based on the distance to the target area and the travel speed of the at least two robotic units. The calculated times can be compared and the robotic unit with the shortest time to reach the target area can be commanded to move into the target area.

According to the invention, two target areas can be determined, wherein one target area is covered by the short range communication reach of a different robotic unit than the other target area, e. g. a first target area within the short range communication reach of the first robotic unit and a second target area within the short range communication reach of the robotic unit determined for the data transfer.

Preferably, one or both target areas have a shape of a circular segment, especially a semi-circular shape. Additionally, the one or both target areas can be oriented towards the robotic unit whose short range communication reach covers the other target area. Thus, the target area covers an area only that can contribute to reduce the radio gap between the first robotic unit and the robotic unit determined for the data transfer. I. e., the broken short range communication chain can be closed very effectively by the usage of the preferred shape of the target area.

The efficiency of the method to close the broken short range communication chain can also be enhanced if for an additional robotic unit a second waypoint within the area of interference at which the first and second robotic unit are coverable by the short range communication reach of the additional robotic unit is determined, and checked whether a predefined condition is fulfilled by the third or by the additional robotic unit.

The condition is defined to avoid that both the third and the additional robotic unit move into the area of interference. To decide which of the at least two robotic units shall be allowed to move into the area of interference, the condition can determine that only the robotic unit being able to reach the area of interference as earliest shall be commanded to move into the area of interference. For example, the time needed to reach the area of interference can be calculated for each of the at least two robotic units based on the distance to the area of interference and the travel speed of the at least two robotic units. The calculated times can be compared and the robotic unit with the shortest time to reach the area of interference can be commanded to move into the area of interference.

If the condition is fulfilled by the third robotic unit, the third robotic unit can be commanded to move to the first waypoint located in the area of interference. If the condition is fulfilled by the additional robotic unit, the additional robotic unit can be commanded to move to the second waypoint located in the area of interference.

Preferably, each robotic unit comprises a second communication device with a long range communication reach being greater than the short range communication reach. Preferably, the robotic unit configured as the logistic unit commands all other robotic units by sending commands via the second communication device. In case of a swarm of robotic units, the logistic unit can also command the complete swarm. The commands can be sent to command a specific robotic unit to start moving, to move to a specific waypoint, to stop immediately, to stop at a waypoint or to initiate a data transfer for example.

Preferably, the long range communication reach covers the field completely so that data can be transferred from a robotic unit, e. g. the logistic unit, to another robotic unit without the need of a robotic unit to approach to the other robotic unit.

Preferably, the bandwidth of the first communication device is higher than the bandwidth of the second communication device and adapted to transfer the operational data of a robotic unit, e. g. the recordings of the field operation. For example, the bandwidth of the first communication device can be designed to transfer the full buffer content in less than one minute. Thus, the long range communication channel can be used for an immediate data exchange to control a robotic unit whereas the short range communication channel can be used for a fast exchange of a great amount of data as the recordings of the field operation.

To indicate that an immediate data exchange is needed, a corresponding data message containing information of the recognition of the necessity of a data transfer for the robotic unit, especially in case of a detection of insufficient free buffer space of the robotic unit, can be sent from the robotic unit to the logistic unit via the second communication device with the long range communication reach. The data message sent from the robotic unit to the logistic unit via the second communication device can be received by the logistic unit. The long range communication channel can also be used by the logistic unit to retrieve the current position of each robotic unit, to retrieve any other status information of the robotic units, e. g. an error message or a confirmation that a process as the data transfer has finished. Additionally, an immediate data exchange can also be required, if the logistic unit needs operational data from a robotic unit, e. g. to plan the tasks for the field operation.

Preferably, the short range communication chain is closed before the buffer of the first robotic unit runs out of data to reduce down time of the robotic unit. Thus, the method will recognize a necessity of a data transfer if a threshold of data stored to the buffer of the first robotic unit is exceeded. The threshold can be set to any value, e. g. 80% of the buffer size. The threshold can be monitored by a controller of the robotic unit.

A necessity of a data transfer for the first robotic unit can also be recognized if additional data to the one stored in the buffer of the robotic unit is required, especially if a data set containing a path to guide the robotic unit and tasks allocated to the path to define the field operation of the robotic unit are missing.

When the broken short range communication chain is closed, a presence of a short range communication chain comprising the at least three robotic units can be detected. In this case, each of the at least three robotic units is covered by the short range communication reach of another robotic unit of the at least three robotic units. I. e., each of the at least three robotic units represent a part or a chain link of the short range communication chain.

Then, the data transfer between the first robotic unit and the robotic unit determined for the data transfer with the first robotic can be performed as follows:
- Determining a robotic unit of the at least three robotic units to transfer data with the first robotic unit,
- determining a rank order of the robotic units being part of the short range communication chain, wherein the first robotic unit and the robotic unit determined for the data transfer with the first robotic unit represent the robotic units of highest and lowest ranks, and the other robotic units being part of the short range communication chain represent robotic units of intermediate ranks, wherein
- the short range communication reach of each robotic unit of an intermediate rank covers at least two other robotic units being part of the short range communication chain.

The data can be transferred between the robotic unit of the highest rank and the robotic unit of the lowest rank. If data is transferred from the robotic unit of the highest rank to the robotic unit of the lowest rank, the data will be sent from the robotic unit of the highest rank to a subsequent robotic unit of the next lower rank according to the rank order covered by the short range communication reach of the robotic unit of the highest rank. Analogously, the data is sent from the robotic unit of the next lower rank to a subsequent robotic unit of an intermediate rank covered by the short range communication reach of the robotic unit of the next lower rank. Finally, the data is sent from the last robotic unit of an intermediate rank whose short range communication reach is covering the robotic unit of the lowest rank to the robotic unit of the lowest rank. I. e., each robotic unit of an intermediate rank is used in the order of its rank as a data transmitter to transfer the data from the robotic unit of the highest rank to the robotic unit of the lowest rank.

If data is transferred from the robotic unit of the lowest rank to the robotic unit of the highest rank, the transfer of data can be performed vice versa.

To avoid that data stored to a buffer of a robotic unit of an intermediate rank is lost due to the data transfer between the robotic unit of the highest rank and the robotic unit of the lowest rank, the data of each robotic unit of an intermediate rank can be backed up before the data transfer, especially copied to the logistic unit. Thus, the data transfer between the robotic unit of the highest rank and the robotic unit of the lowest rank is initiated after the data of all robotic units of an intermediate rank was transferred to the robotic unit of the lowest rank by sending the data of a robotic unit of a higher rank to a robotic unit of a lower rank.

Preferably, the method ensures that the free buffer space of each robotic unit of an intermediate rank is sufficient for receiving the data to be transferred between the robotic unit of the highest rank and the robotic unit of the lowest rank. Thus, a data transfer between the robotic unit of the lowest rank and the robotic unit of the highest rank is initiated after the buffers of all robotic units of an intermediate rank were freed up.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Further, the features of the robotic system and the method for exchanging data within a robotic system according to this invention can be combined with the features of a robotic system and a method for exchanging data within a robotic system described in the patent application with the application number 2019413.0, filed with the intellectual property office of the United Kingdom on the 9^{th} of December 2020, wherein the content of that patent application is incorporated in this invention by reference.

### BRIEF DESCRIPTION OF THE DRAWINGS

The invention will now be described, by way of example only, with reference to the accompanying drawings in which:
Figure 1 shows several robots operating in a field;
Figure 2 shows several robots operating in a field;
Figure 3 shows several robots operating in a field;
Figure 4 schematically represents a field robot;
Figure 5 schematically represents a logistic unit;
Figure 6 shows a flow chart; and
Figure 7 shows a flow chart.

### DETAILED DESCRIPTION

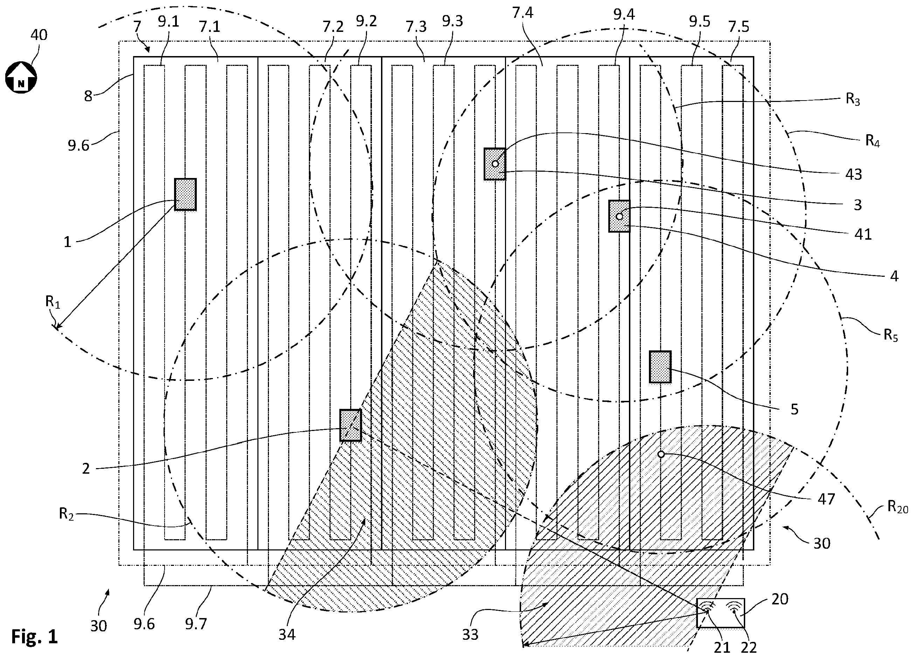

The invention is directed to a robotic system comprising several robotic units. A robotic unit can be a mobile field robot as well as a mobile or stationary logistic unit. The robotic units 1 to 5 and 20 are deployed on an agricultural field 7 as shown in Fig. 1. The agricultural field 7 is circumscribed by the border 8. The periphery outside the border 8 can be used as a headland 30. Inside the border 8, the agricultural field 7 is divided into five subfields 7.1 to 7.5. On each subfield 7.1 to 7.5 a separate autonomous field robot 1 to 5 is deployed to perform an agricultural operation, e. g. seeding seeds, weeding, spraying, analyzing the plants or the soil, etc. Field robot 1 is allocated to subfield 7.1, field robot 2 is allocated to subfield 7.2, and so on, whereas each field robot 1 to 5 has its own path 9.1 to 9.5 to traverse and to treat its correlated subfield 7.1 to 7.5.

### Field robots

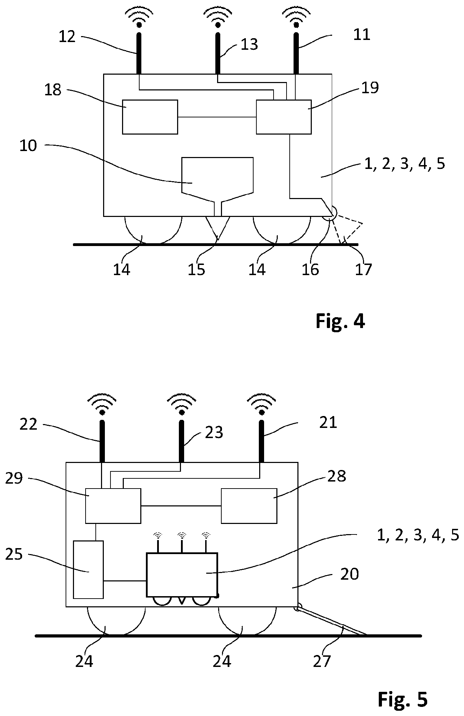

A schematic example of a field robot 1 to 5 is shown in Fig. 4. Each field robot 1 to 5 comprises at least three wheels 14 to traverse the agricultural field 7, a tool 15 to treat the agricultural field 7 (e. g. a weeding unit, a spraying, seeding unit or something else), a vehicle guidance system 13 comprising a global navigation satellite system (GNSS) receiver (e. g. GPS, GLONASS, Galileo, etc., also in combination with RTK), a sensor device 16 (e. g. camera) with a sensor detection range 17 to capture data of the agricultural field 7 (e. g. condition of the plants or the soil) or the treatment of the agricultural field 7 (e. g. recordings of the executed task at a certain position in the field 7) and a local data storage used as buffer 18 (e. g. store the recordings of the field operation, e. g. to store the position, time and sensor data acquired by the sensor device, while traversing or treating the agricultural field 7).

The tool 15 can be connected with a bin 10 that can be filled with resources as seeds to be planted or liquids to be sprayed.

Additionally, the field robot 1 to 5 comprises a short range communication device 11 with a high bandwidth and a long range communication device 12 with a low bandwidth. The field robot 1 to 5 comprises also a controller 19 (e. g. a microcontroller) that is connected with all controllable elements of the robot (e. g. the short / long range communication devices 11 and 12, the vehicle guidance system 13, the sensor device 15, the buffer 18 and the actuators (not shown) of the tool 15 and the wheels 14.

### Logistic unit

A (stationary) logistic unit 20 is deployed outside the field 7 (inside or outside the headland 30). Fig. 5 shows a schematic view of the logistic unit 20. The logistic unit 20 comprises a cellular communication device 23 to get connected with an internet provider or any cloud service. The position of the logistic unit 20 outside the field 7 is chosen such that it has a cellular net connectivity of a very good quality.

In addition, the logistic unit 20 comprises a local data storage 28 that is large enough to store all data required for the field operation of all robots 1 to 5 from the beginning to the end of the operation.

The logistic unit 20 comprises also a service unit 25 for maintenance and inspection of any robot 1 to 5. A robot 1 to 5 can access the logistic unit 20 via a ramp 27 and get connected with the service unit 25. Then, the service unit 25 can refresh the energy storage, e. g. a battery (not shown), with electric energy or refill the bin 10 with new resources. The service unit 25 can also start a diagnosis function to check the functionality of the connected robot and repair a malfunction. The service unit 25 can also exchange the tool 15 of the robot, e. g. substitute a seeding unit by a spraying unit. The service unit 25 connected with the robot has also access to the buffer 18 of the robot and can read, write and delete data of the buffer 18, e. g. if the wireless connection has a failure. A central controller 29 is connected with all controllable elements of the logistic unit 20.

Analogous to the robots 1 to 5, the logistic unit 20 comprises a short distance communication device 21 with high bandwidth and a long distance communication device 22 with low bandwidth to enable two different channels of data communication between the logistic unit 20 and each single robot 1 to 5.

### Long and short range communication

The reach of the long range communication devices 12 and 22 are long enough that each robot 1 to 5 can stay connected to the logistic unit 20 at every place along their paths 9.1 to 9.5 to send and receive data via a corresponding long range communication channel. But the bandwidth of the long range communication devices is rather low and enables to transfer only small data packages as simple commands (as start moving, stop moving, return to logistic unit, etc.) or a coordinate to which a robot 1 to 5 shall move to.

In contrast to the long range communication devices 12 and 22, the short range communication devices 11 and 21 have a high bandwidth but a low reach limited to a radius R. Fig. 1 to 3 show the reaches R₁ to R₅ and R₂₀ of each short range communication devices 11 of the corresponding robots 1 to 5 and the short range communication device 21 of the logistic unit 20.

If big data packages as the data recordings of a robot 1 to 5 shall be transferred from the corresponding robot 1 to 5 to the logistic unit 20, the higher bandwidth of the short range distance communication devices 11 is needed. But the agricultural field 7 can't be covered completely by the short range distance communication devices 21 and 22 for a stable data exchange connection due to the much more limited reach of the short range distance communication devices 11 and 21. A data transfer via the short range channel is only possible, if the distance between the corresponding robot 1 to 5 and the logistic unit 20 is small enough. I. e., if any robot 1 to 5 and the logistic unit 20 are covered mutually by their short range communication reaches R, a bidirectional data transfer via the short range communication channel between the logistic unit 20 and the corresponding robot 1 to 5 is possible. For example, this is the case in Fig. 1: The reach R₂₀ of the logistic unit 20 covers the field robot 5, and the reach R₅ of the field robot 5 covers the logistic unit 20. When only one unit is covered by the reach R of the other unit, at least a unidirectional communication is possible.

If data between one of the field robots 1 to 5 being outside of the reach R₂₀ of the logistic unit 20 and the logistic unit 20 being outside of the reach R₁ to R₅ of the corresponding robot 1 to 5 shall be exchanged through the short range communication devices 11 and 21, the corresponding robot 1 to 5 would need to approximate to the logistic unit 20 until the robot 1 to 5 and the logistic unit 20 are mutually covered by their reaches R₁ to R₅ and R₂₀. But the greater the distance between a field robot 1 to 5 and the logistic unit 20 is, the more inefficient the field operation will be, because the corresponding field robot 1 to 5 needs to drive additional routes, consumes more energy, needs more operational time, etc.

Thus, the intention of the invention is to make a connection for data transfer between the logistic unit 20 and a field robot both located outside of the short range communication reach R of each other by using at least one of the other field robots as a connection link to transfer data between the logistic unit 20 and the field robot outside of the reach R₂₀.

Preferably, the field robot used as a connection link doesn't leave its corresponding subfield, and especially doesn't leave its corresponding path in the subfield. I. e., the field robot used as a connection link moves between the logistic unit 20 and the field robot both to be connected with each other so that the short range communication reach R of the robot used as a connection link covers both the logistic unit 20 and the other field robot. While the field robot used as a connection link is moving, the robot stays within its subfield, and preferably stays on its path. After the wards, data can be transferred from the logistic unit 20 via the field robot used as a connection link to the other field robot and vice versa.

The invention will be explained now in more detail with the following description.

As shown in Fig. 1, the field robot 2 treating the subfield 7.2 is out of the short range communication reach R₂₀ of the logistic unit 20 as well as the short range communication reach R₂ of the field robot 2 doesn't cover the logistic unit 20. So, the field robot 2 and the logistic unit 20 can't transfer data through the short range communication channel neither bidirectionally nor unidirectionally.

It is assumed now, that the buffer 18 of the field robot 2 is going to be completely full. So, the data stored in the buffer 18 shall be transferred to the data storage 28 of the logistic unit 20 to back up the data. Afterwards, the buffer 18 can be freed up for further recordings of the field robot 2 or used to store new operational data send from the logistic unit 20.

The controller 19 of the field robot 2 detects that the buffer 18 is going to exceed and sends a corresponding signal (e. g. buffer exceeding) to the logistic unit 20 via the long range communication channel.

Since the field robot 2 and the logistic unit 20 are not covered mutually by their short range communication reaches R₂ and R₂₀, a direct data transfer between both units is not possible. Thus, at least one additional field robot operating in the agricultural field 7 is needed as a (bidirectional) data transmitter between the field robot 2 and the logistic unit 20 to build up a short range communication chain.

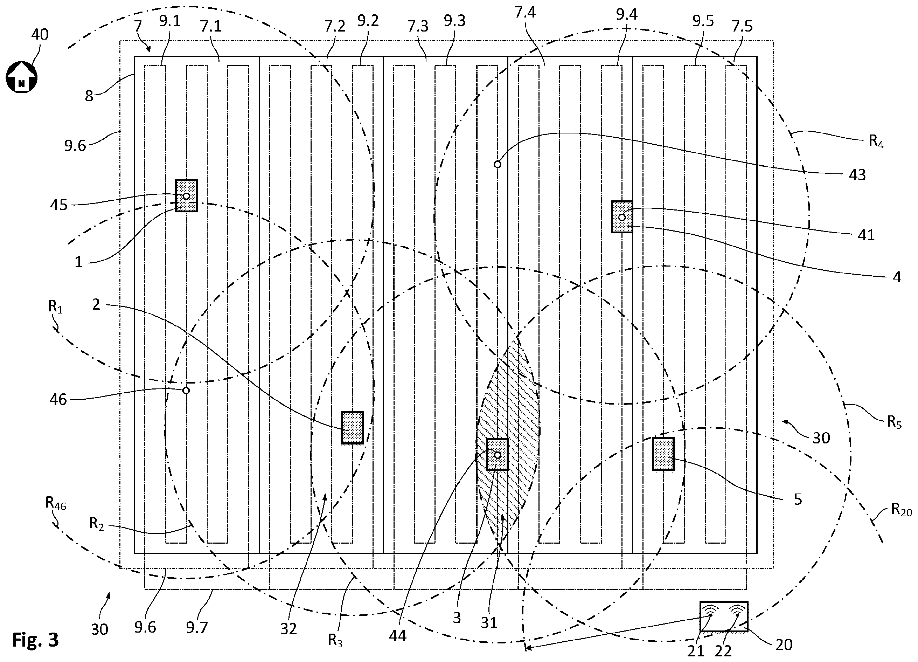

By means of this short range communication chain, the logistic unit 20, and at least one additional field robot and the field robot 2 get connected with their short range communication devices 11 and 21 in such a way that data can be transferred from one unit to the other unit. I. e., the short range communication chain comprises at least three units whereas the short range communication reach R of at least one unit covers simultaneously a second and a third unit as depicted in Fig. 3: The short range communication reach R₅ of the field robot 5 covers the logistic unit 20 and the field robot 3. Here additionally, the short range communication reach R of another unit covers simultaneously two different units, in particular field robots 2 and 5 are covered by the short range communication reach R₃ of the field robot 3. In sum, the short range communication chain of Fig. 3 comprises four units.

In such a situation, the field robot 3 and the field robot 5 could be used as a transmitter to transfer data between the field robot 2 and the logistic unit 20 as well as the field robot 5 could be used as transmitter to transfer data between the field robot 3 and the logistic unit 20 via the short range communication channel. A bidirectional data transfer is possible to transfer the recordings of a robot to the logistic unit 20 and to transfer a new data set comprising a new path segment, corresponding waypoints and tasks allocated to the path segment from the logistic unit 20 to a specific robot connected to the short range communication chain.

So, each unit represents a chain link of the short range communication chain, whereas two subsequent chain links are covered mutually their short range communication reaches R. It is clear that Fig. 3 shows an example only and any of the robots 1 to 5 could be part of the short range communication chain.

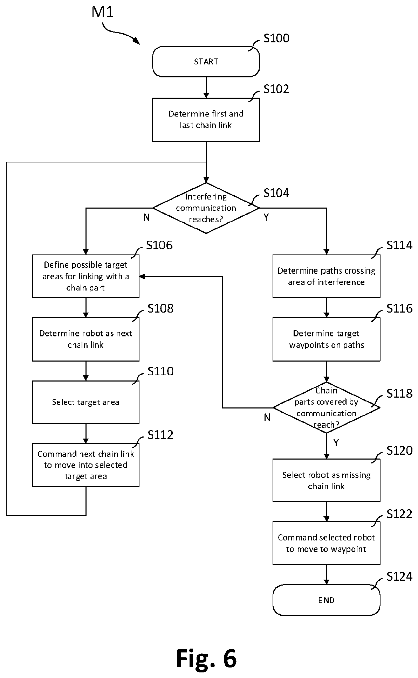

To build up the short range communication chain, the central controller 29 of the logistic unit executes a method M1 as depicted in Fig. 6. The method M1 starts at step S100 and proceeds with step S102 to define the first and the last chain link. The logistic unit 20 is defined as first chain link per default. The field robot whose data shall be exchanged with the logistic unit 20 is defined as the last chain link. According to this example, the field robot 2 is defined as the last chain link. So, both chain links represent a broken short range communication chain with a first chain part comprising the first chain link (here: Logistic unit 20) and a second chain part comprising the last chain link (here: Field robot 2).

Then, the broken short range communication chain will be closed stepwise. The method M1 proceeds to step S104 to check if a short range communication reach of the first chain part interferes with a short range communication reach of the second chain part. The central controller 29 of the logistic unit 20 requests the positions of the field robot 2 over the long range communication channel and evaluates the positions of the logistic unit 20 and the field robot 2. Based on the positions and the short range communication reaches R₂ and R₂₀ of the logistic unit 20 and the field robot 2, the central controller 29 detects that there is no interference of the short range communication reach R₂₀ of the logistic unit 20 representing the first chain part and the short range communication reach R₂ of the field robot 2 representing the second chain part, as depicted in Fig. 1.

As consequence, the method M1 proceeds to step S106 to define at least a possible target area for linking into which one of the field robots not being part of the short range communication chain yet shall move to get the first chain part 20 connected with the second chain part 2. As depicted in Fig. 1, the central controller 29 of the logistic unit 20 defines a first possible target area 33 covered by the short range communication reach R₂₀ of the first chain part 20 and a second possible target area 34 covered by the short range communication reach R₂ of the second chain part 2. I. e., the first target area 33 is covered by a short range communication reach of a different robotic unit than the second target area 34. Both target areas 33 and 34 can have a shape of a circular segment. For example, the target areas 33 and 34 can be a sector with semi-circular shape with 180° as depicted in Fig. 1. Alternatively, smaller sectors with smaller angles, e. g. 120°, 90°, etc., are also possible.

The first target area 33 is oriented towards the robotic unit 2 whose short range communication reach covers the other target area 34. Preferably, the first and second target areas 33 and 34 are oriented symmetrically to each other, especially axisymmetrically.

The radius of the target areas 33, 34 can be smaller than the corresponding short range communication reaches R₂ and R₂₀ covering the target areas 33, 34. The radius of the target areas 33, 34 is preferably adjusted to the field robot with the shortest short range communication reach R (for simplification it is assumed that the short range communication reaches R₁ to R₅ of all field robots 1 to 5 are of the same dimension as shown in Fig. 1).

Thereafter, the method M1 proceeds to step S108 and the central controller 29 determines the next chain link to be connected to one of the two chain parts 2 and 20. To build up the short range communication chain as fast as possible, the central controller 29 determines as next chain link one of the available field robots 1, 3, 4 and 5 travelling along their corresponding paths 9.1, 9.3, 9.4 and 9.5 that can be connect fastest with one of the both chain parts 2 or 20 for a short range communication.

The logistic unit 20 requests the positions of all available field robots 1, 3, 4 and 5 communicating over the long range communication channel. Then, the central controller 29 of the logistic unit 20 evaluates the positions of these field robots and determines the path distances of each available field robot 1, 3, 4 and 5 to enter both the first possible target area 33 for linking as well as the second possible target area 34 for linking when travelling along their corresponding paths 9.1, 9.3, 9.4 and 9.5.

For simplicity, it is assumed that the available field robots 1, 3, 4 and 5 travel with the same speed. So, the field robot with the shortest path distance to either the first target area 33 or to the second target area 34 will also be the fastest one. But it is also possible that the central controller 29 of the logistic unit 20 retrieves the speed information of each field robot 1 to 5 and calculates the time for each robot to reach a specific position.

In case of the constellation of Fig. 1, the central controller 29 determines the field robot 5 as the next chain link because the field robot 5 is deemed to enter one of the both target areas 33, 34 as the earliest. As can be seen in Fig. 1, field robot 5 has the shortest path distance to enter a target area, here the first target area 33, compared to all other field robots.

For the same reason, the central controller 29 selects the first possible target area 33 as the target area the field robot 5 shall move to at step S110 of the method M1. In accordance with the shortest path distance of field robot 5, the central controller 29 determines a waypoint 47 within the selected target area 33 located on the path 9.5 of the field robot 5.

With the following step S112 of method M1, the central controller 29 sends the coordinates of the waypoint 47 to the field robot 5 as the next chain link via the long range communication channel and commands the field robot 5 as the next chain link to move to the waypoint 47 into the selected target area 33.

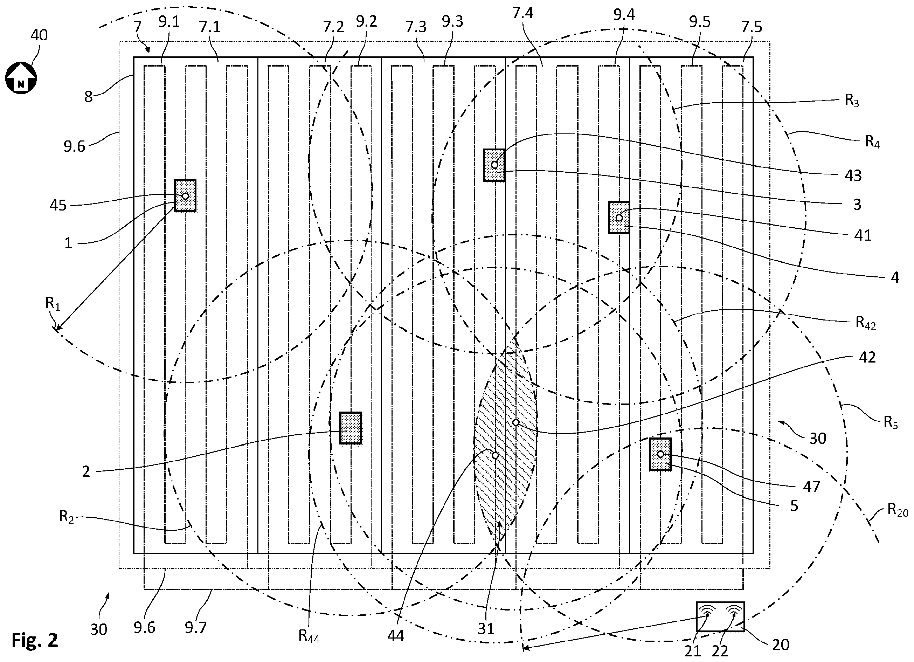

As consequence, the field robot 5 receives the coordinate of the waypoint and the command to move via its long range communication device 12. Then, the field robot 5 moves from its current position (as depicted in Fig. 1) to the waypoint 47 along its path 9.5 (as depicted in Fig. 2).

As can be seen in Fig. 2 now, the logistic unit 20 as the first chain link and the field robot 5 as the next chain link are covered mutually by their short range communication reaches R₂₀ and R₅. So, the first chain part comprises the logistic unit 20 and the field robot 5. In the course of this configuration, the logistic unit 20 and the field robot 5 can transfer data bidirectionally. But the field robot 2 treating the subfield 7.2 is still out of the short range communication reach R₂₀ of the logistic unit 20 as well as the short range communication reach R₂ of the field robot 2 doesn't cover the logistic unit 20.

Because no other field robot moved into the second target area 34, the second chain link comprises the field robot 2 only.

The method M1 steps back to step S104 and the central controller 29 checks again if a short range communication reach of the first chain part interferes with a short range communication reach of the second chain part. The central controller 29 of the logistic unit 20 requests the positions of the field robots 2 and 5 over the long range communication channel and evaluates the positions of the field robots 2 and 5. Based on the positions and the short range communication reaches R₂ and R₃ of the field robots 2 and 5, the central controller 29 detects now that there is an area of interference 31 of the short range communication reach R₅ of the field robot 5 being part of the first chain part and the short range communication reach R₂ of the field robot 2 being part of the second chain part, as depicted in Fig. 2.

Then, the method M1 proceeds with step S114 and the central controller 29 determines all paths 9.1 to 9.5 crossing the area of interference 31. In the constellation of Fig. 2, the central controller 29 detects, that the path 9.3 of field robot 3 and the path 9.4 of field robot 4 each cross the area of interference 31.

The method proceeds with step S116 and the central controller 29 determines for each field robot whose path crosses the area of interference 31 a target waypoint located within the area of interference 31. According to Fig. 2, the central controller 29 determines the target waypoint 44 on path 9.3 for the field robot 3 and the target waypoint 42 on path 9.4 for the field robot 4. At these waypoints 42 and 44, the field robots 3 and 4 would be covered by the short range communication range R₃ of the field robot 5 being part of the first chain part and by the short range communication range R₂ of the field robot 2 being part of the second chain part.

The method proceeds with step S118 and the central controller 29 determines if the short range communications reaches R of the field robots whose paths crosses the area of interference 31 would cover both a unit of the first and the second chain part when the field robots would be arrived at their corresponding waypoints located in the area of interference 31.

If none of the field robots has a sufficient short range communication reach R, the method M1 steps back to step S106 to add an additional field robot as a next chain link either to the first or second chain part.

Else as can be seen in Fig. 2, the short range communication reach R₃ of the field robot 3 at the waypoint 44 indicated as the short range communication reach R₄₄ covers both the field robot 5 as part of the first chain part and the field robot 2 as part of the second chain part. Analogously, the short range communication reach R₄ of the field robot 4 at the waypoint 42 indicated as the short range communication reach R₄₂ covers both the field robot 5 as part of the first chain part and the field robot 2 as part of the second chain part, too. I. e., both field robots 3 and 4 could be used as a chain link to close the short range communication chain by establishing a bidirectional short range communication between the field robots 2 and 5.

To decide which of the both field robots 3 and 4 shall be selected as missing chain link to close the short range communication chain, the method proceeds to step S120. The central controller 29 checks whether a predefined condition is fulfilled by one of the field robots 3 and 4. E. g., central controller 29 can select the field robot having the shortest path distance to its corresponding target waypoint located at the area of interference 31. As depicted in Fig. 2, the path distance of field robot 3 located at waypoint 43 along path 9.3 to the target waypoint 44 is shorter than the path distance of field robot 4 located at waypoint 41 along path 9.4 to the target waypoint 42. So, the condition of the shortest distance to the target waypoint is fulfilled by the field robot 3. Consequently, the central controller 29 selects field robot 3 as missing chain link to close the short range communication chain.

The central controller 29 can also check other or additional conditions to select a field robot as missing chain link. For example, the central controller 29 can check which field robot can travel faster, which field robot would arrive earlier at its target waypoint, which field robot has enough power, etc.

After the selection of a field robot as missing chain link, the method M1 proceeds with step S122 and the central controller 29 sends a command to the selected field robot 3 via the long range communication channel to move to its target waypoint 44.

The field robot 3 receives the command of the central controller 29 by the long range communication device 12 and follows the command.

When the field robot 3 arrives at the target waypoint 44, the short range communication chain will be closed, as depicted in Fig. 3. The short range chain comprises the logistic unit 20 as first chain link, the field robot 5 as second chain link, the field robot 3 as third chain link and the field robot 2 as forth and last chain link whereas two neighboring chain links are covered mutually by their short range communication reaches R to transfer data bidirectionally.

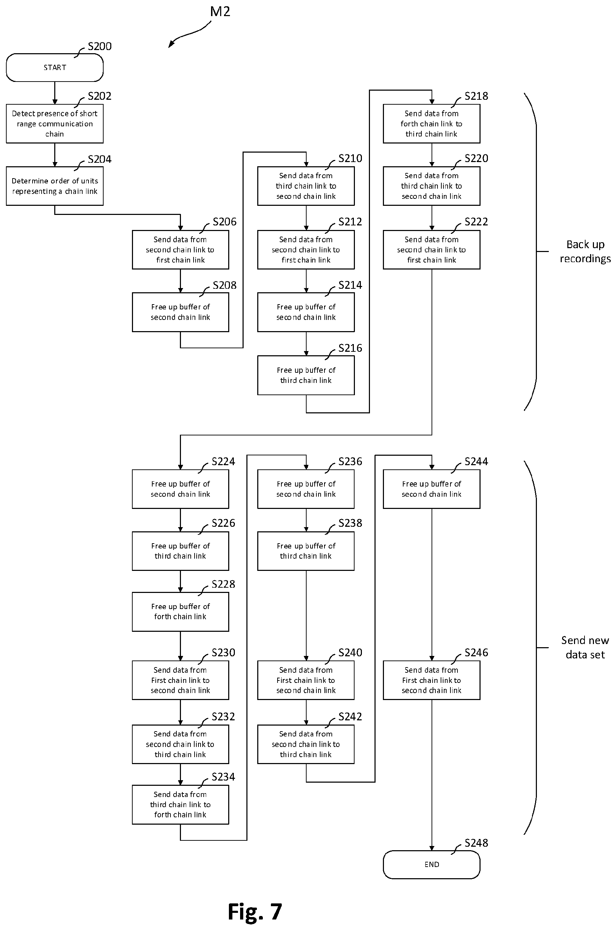

After the method M1 ends at step S124, the method M2 as shown in Fig. 7 starts at step S200 to execute the data transfer between the field robot 2 and the logistic unit 20.

The logistic unit 20 surveillances the positions of all field robots 1 to 5 and retrieves regularly the positions through the long range communication channel. Based on the positions of the robots 1 to 5 and the short range communication reaches R₁ to R₃ of each robot 1 to 5 covering another field robot, the central controller 29 of the logistic unit 20 can determine whether a short range communication chain is present and which of the field robots 1 to 5 are part of the short range communication chain.

The central controller 29 of the logistic unit executes step S202 of method M2 and detects that a short range communication chain is present according to the constellation of Fig. 3.

Proceeding with the step S204, the central controller 29 determines the order of all units representing a chain link. Per default, the central controller 29 defines the logistic unit 20 as first chain link. Then, the central controller 29 defines the field robot 5 covered by the short range communication reach R₂₀ of the first chain link as second chain link, the field robot 3 covered by the short range communication reach R₅ of the second chain link as third chain link and the field robot 2 covered by the short range communication reach R₃ of the third chain link as forth chain link.

Then, the central controller 29 coordinates the data transfer between the separate chain links by sending appropriate commands to the corresponding chain links through the long range channel as described in the following.

The method M2 proceeds to step S206 and the central controller 29 commands the second chain link (field robot 5) to send the data stored in its buffer 18 to the first chain link (logistic unit 20) through the short range communication channel. The data of the second chain link is backed up to the data storage 28 of the logistic unit 20.

The method M2 proceeds to step S208 and the central controller 29 commands the second chain link (field robot 5) to free up its buffer 18.

The method M2 proceeds to step S210 and the central controller 29 commands the third chain link (field robot 3) to send the data stored in its buffer 18 to the second chain link (field robot 5) through the short range communication channel.

The method M2 proceeds to step S212 and the central controller 29 commands the second chain link (field robot 5) to send the data of the third chain link (field robot 3) stored in its buffer 18 to the first chain link (logistic unit 20) through the short range communication channel. The data of the third chain link is backed up to the data storage 28 of the logistic unit 20.

The method M2 proceeds to step S214 and the central controller 29 commands the second chain link (field robot 5) to free up its buffer 18.

The method M2 proceeds to step S216 and the central controller 29 commands the third chain link (field robot 3) to free up its buffer 18.

The method M2 proceeds to step S218 and the central controller 29 commands the forth chain link (field robot 2) to send the data stored in its buffer 18 to the third chain link (field robot 3) through the short range communication channel.

The method M2 proceeds to step S220 and the central controller 29 commands the third chain link (field robot 3) to send the data of the forth chain link (field robot 2) stored in its buffer 18 to the second chain link (field robot 5) through the short range communication channel.

The method M2 proceeds to step S222 and the central controller 29 commands the second chain link (field robot 5) to send the data of the forth chain link (field robot 2) stored in its buffer 18 to the first chain link (logistic unit 20) through the short range communication channel. The data of the forth chain link is backed up to the data storage 28 of the logistic unit 20.

Hence, the data of the field robot 2 was transferred through the short range communication chain to the logistic unit 20. In addition, the data of the field robots 3 and 5 was transferred to the logistic unit 20, too.

The method M2 proceeds to step S224 and the central controller 29 commands the second chain link (field robot 5) to free up its buffer 18.

The method M2 proceeds to step S226 and the central controller 29 commands the third chain link (field robot 3) to free up its buffer 18.

The method M2 proceeds to step S228 and the central controller 29 commands the forth chain link (field robot 2) to free up its buffer 18.

Now, the field robots 2, 3 and 5 are ready to receive data from the logistic unit 20 and to store the data to their corresponding buffer 18.

If data shall be sent from the logistic unit 20 to the forth chain link (field robot 2) the method steps to step S230 and the central controller 29 commands himself as first chain link to send data to the second chain link (field robot 5) through the short range communication channel.

The method M2 proceeds to step S232 and the central controller 29 commands the second chain link (field robot 5) to send the data of the logistic unit 20 stored in its buffer 18 to the third chain link (field robot 3) through the short range communication channel.

The method M2 proceeds to step S234 and the central controller 29 commands the third chain link (field robot 3) to send the data of the logistic unit 20 stored in its buffer 18 to the forth chain link (field robot 2) through the short range communication channel.

Because the data is assigned to the field robot 2, the data can be removed from the buffers 18 of the field robots 3 and 5 used as transmitter only.

Thus, the method M2 proceeds to step S236 and the central controller 29 commands the second chain link (field robot 5) to free up its buffer 18.

The method M2 proceeds to step S238 and the central controller 29 commands the third chain link (field robot 3) to free up its buffer 18.

If data shall be sent from the logistic unit 20 to the third chain link (field robot 3) the method steps to step S240 and the central controller 29 commands himself as first chain link to send data to the second chain link (field robot 5) through the short range communication channel.

The method M2 proceeds to step S242 and the central controller 29 commands the second chain link (field robot 5) to send the data of the logistic unit 20 stored in its buffer 18 to the third chain link (field robot 3) through the short range communication channel.

Because the data is assigned to the field robot 3, the data can be removed from the buffer 18 of the field robot 5 used as transmitter only.

Thus, the method M2 proceeds to step S244 and the central controller 29 commands the second chain link (field robot 5) to free up its buffer 18.

Finally, if data shall be sent from the logistic unit 20 to the second chain link (field robot 5) the method steps to step S246 and the central controller 29 commands himself as first chain link to send data to the second chain link (field robot 5) through the short range communication channel.

The method M2 ends with step S248.

Depending on which field robot 2, 3 and 5 shall receive data from the logistic unit 20, the central controller 29 can execute or skip any of the steps S224 to S246.

It is also possible to extend the short range communication chain of Fig. 3 with additional chain links at any time by commanding a field robot to move into the short range communication reach R of one of the chain links.

As can be seen in Fig. 3, field robot 1 located at waypoint 45 is travelling along its path 9.1. If this field robot shall be part of the short range communication chain, the central controller 29 checks which short range communication reach R of which chain link covers a part of the path 9.1 of the field robot 1. Here, the short range communication range R₂ of the field robot 2 representing the last chain link covers a part of the path 9.1. Thereafter, the central controller 29 determines a waypoint located within the short range communication range R₂ of the field robot 2 so that the field robot 1 and 2 are covered mutually by their short range communication reaches R₁ and R₂.

For example, the central controller 29 determines the waypoint 46 on the path 9.1 of the field robot 1. As can be seen in Fig. 3, the short range communication reach R₁ of the field robot 1 at the waypoint 46 indicated as the short range communication reach R₄₆ would cover the field robot 2 representing the last chain part whereas the field robot 1 located at the waypoint 46 would be covered simultaneously by the short range communication reach R₂ of the field robot 2.

When the field robot 1 arrives at the waypoint 46 the logistic unit 20 commanded it to move to, the logistic unit 20 starts the method M2 again and detects at step S202 the presence of a short range communication chain comprising the logistic unit 20 and the field robots 1, 2, 3 and 5 as five chain links. To transfer data between these five chain links, the central controller 29 can execute the steps of the method M2 in an analogous manner including additional steps for the field robot 1.

As can be seen in Fig. 1 to 3, additional paths 9.6 and 9.7 are defined in the headland 30. Each path 9.1 to 9.5 of the field robots 1 to 5 is connected with the paths 9.6 and 9.7 so that each field robot 1 to 5 can quit its corresponding subfield 7.1 to 7.5 and move on the headland 30. Thus, it is also possible that a robot located in the headland 30 can be part of the short range communication chain.

It is also clear that the invention is not limited to the five field robots 1 to 5 depicted in the Fig. 1 to 3. Instead, additional robots can be deployed on the agricultural field 7 or on the headland 30 whereas each of these robots can be used as a chain link.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

It will be appreciated that the above embodiments are discussed by way of example only. Various changes and modifications can be made without departing from the scope of the present application.

## Claims

1. A method for exchanging data within a robotic system, the robotic system comprising at least three robotic units (1, 2, 3, 4, 5, 20), each robotic unit comprising a first communication device (11, 21) with a short range communication reach for exchanging data with each other and a data storage (18, 21), the method comprising the steps:
- Recognizing a necessity of a data transfer for a first robotic unit (2) of the at least three robotic units (1, 2, 3, 4, 5, 20),
- determining an area of interference (31) of the short range communication reach of the first robotic unit (2) and the short range communication reach of a second robotic unit (5) of the at least three robotic units (1, 2, 3, 4, 5, 20), the second robotic unit (5) being out of the short range communication reach of the first robotic unit (2),
- determining a waypoint (44) within the area of interference (31) for a third robotic unit (3) of the at least three robotic units (1, 2, 3, 4, 5, 20), and
- commanding the third robotic unit (3) to move to the waypoint (44),
- initiating a data transfer from the first robotic unit to the second robotic unit via the third robotic unit.

2. The method for exchanging data within a robotic system as claimed in claim 1, the method comprising the steps:
- checking whether the first and second robotic unit (2, 5) are coverable by the short range communication reach of the third robotic unit (3) at the waypoint (44), and
- commanding the third robotic unit (3) to move to the waypoint (44) if the first and second robotic unit (2, 5) are coverable by the short range communication reach of the third robotic unit (3) at the waypoint (44).

3. The method for exchanging data within a robotic system as claimed in claim 2, the method comprising the step:
- Determining at least a target area (33) within the short range communication reach of the first and / or of the second robotic unit (2, 5) if the first and the second robotic unit (2, 5) will be out of the short range communication reach of the third robotic unit (3) at the waypoint (44).

4. The method for exchanging data within a robotic system as claimed in any preceding claim, the method comprising the steps:
- Determining a robotic unit (20) of the at least three robotic units (1, 2, 3, 4, 5, 20) to transfer data with the first robotic unit (2), wherein the short range communication reach of the robotic unit (20) and the short range communication reach of the first robotic unit (2) being free of an interference, and
- Determining at least a target area (33, 34) within the short range communication reach of the first robotic unit (2) and / or the robotic unit (20) determined for the data transfer with the first robotic unit (2).

5. The method for exchanging data within a robotic system as claimed in claim 4, wherein the robotic system comprises at least four robotic units (1, 2, 3, 4, 5, 20), the method comprising the step:
- Determining one of the at least four robotic units (1, 2, 3, 4, 5, 20) except for the first robotic unit (2) and the robotic unit (20) determined for the data transfer with the first robotic unit (2), wherein the one robotic unit (5) is able to reach the at least one target area (33, 34) earlier than the other robotic units (1, 3, 4).

6. The method for exchanging data within a robotic system as claimed in one of the claims 3 to 5, the method comprising the step:
- Determining two target areas (33, 34), both target areas (33, 34) having a shape of a circular segment, especially a semi-circular shape, wherein
- the one target area (33) is covered by a short range communication reach of a different robotic unit (20) than the other target area (34) and
- the one target area (33) is oriented towards the robotic unit (2) whose short range communication reach covers the other target area (34).

7. The method for exchanging data within a robotic system as claimed in any preceding claim, the method comprising the steps:
- Determining a second waypoint (42) within the area of interference (31) for an additional robotic unit (4) at which the first and second robotic unit (2, 5) are coverable by the short range communication reach of the additional robotic unit (4),
- checking whether a predefined condition is fulfilled by the third or by the additional robotic unit (3, 4), and
- commanding the third robotic unit (3) to move to the waypoint (44) if the condition is fulfilled by the third robotic unit (3).

8. The method for exchanging data within a robotic system as claimed in any preceding claim, wherein each robotic unit comprises a second communication device (12, 22) with a long range communication reach being greater than the short range communication reach, wherein especially the long range communication reach covers a field (7) completely, and wherein one robotic unit (20) is configured as a logistic unit (20) to command the other robotic units by sending commands via the second communication device (22).

9. The method for exchanging data within a robotic system as claimed in 8, wherein the method comprises the step:
- Receiving data sent from the first robot unit (2) to the logistic unit (20) via the second communication device (12) with the long range communication reach, the data containing information of the recognition of a necessity of a data transfer, especially a detection of insufficient free buffer space of the first robotic unit (2).

10. The method for exchanging data within a robotic system as claimed in any preceding claim, wherein the method comprises the step:
- recognizing a necessity of a data transfer if a threshold of data stored to the buffer (18) of the first robotic unit (2) is exceeded, or if additional data to the one stored in the buffer (18) of the first robotic unit (2) is required, especially if a data set containing a path to guide the first robotic unit (2) and tasks allocated to the path to define the field operation of the first robotic unit (2) are missing.

11. The method for exchanging data within a robotic system as claimed in any preceding claim, wherein the method comprises the step:
- Detecting a presence of a short range communication chain comprising at least three robotic units (2, 3, 5, 20) wherein each robotic unit is covered by the short range communication reach of at least one other robotic unit.

12. The method for exchanging data within a robotic system as claimed in claim 11, wherein the method comprises the steps:
- Determining a robotic unit (20) of the at least three robotic units (2, 3, 5, 20) to transfer data with the first robotic unit (2),
- determining a rank order of the robotic units being part of the short range communication chain, wherein the first robotic unit (2) and the robotic unit (20) determined for the data transfer with the first robotic unit (2) represent the robotic units of highest and lowest ranks, and the other robotic units (3, 5) being part of the short range communication chain represent robotic units of intermediate ranks, wherein
- the short range communication reach of each robotic unit of an intermediate rank covers at least two other robotic units being part of the short range communication chain.

13. The method for exchanging data within a robotic system as claimed in claim 12, wherein the method comprises the steps:
- Initiating a data transfer between the robotic unit of the highest rank (2) and the robotic unit of the lowest rank (20) after the data of all robotic units of an intermediate rank was transferred to the robotic unit of the lowest rank (20) by sending the data of a robotic unit of a higher rank to a robotic unit of a lower rank.

14. The method for exchanging data within a robotic system as claimed in claim 12 or 13, wherein the method comprises the steps
- Initiating a data transfer between the robotic unit of the lowest rank (20) and the robotic unit of the highest rank (2) after the buffers of all robotic units of an intermediate rank were freed up.

15. A controller (19, 29) configured to execute the method as claimed in one of the claims 1 to 14.

## Patentansprüche

1. Verfahren zum Austauschen von Daten innerhalb eines Robotersystems, wobei das Robotersystem mindestens drei Robotereinheiten (1, 2, 3, 4, 5, 20) umfasst, wobei jede Robotereinheit eine erste Kommunikationsvorrichtung (11, 21) mit einer Nahbereichskommunikationsreichweite zum Austauschen von Daten miteinander und eine Datenspeicherung (18, 21) umfasst, wobei das Verfahren die Schritte umfasst:
- Erkennen einer Notwendigkeit einer Datenübertragung für eine erste Robotereinheit (2) der mindestens drei Robotereinheiten (1, 2, 3, 4, 5, 20),
- Bestimmen eines Interferenzbereichs (31) der Nahbereichskommunikationsreichweite der ersten Robotereinheit (2) und der Nahbereichskommunikationsreichweite einer zweiten Robotereinheit (5) der mindestens drei Robotereinheiten (1, 2, 3, 4, 5, 20), wobei sich die zweite Robotereinheit (5) außerhalb der Nahbereichskommunikationsreichweite der ersten Robotereinheit (2) befindet,
- Bestimmen eines Wegpunkts (44) innerhalb des Interferenzbereichs (31) für eine dritte Robotereinheit (3) der mindestens drei Robotereinheiten (1, 2, 3, 4, 5, 20) und
- Anweisen der dritten Robotereinheit (3), sich zu dem Wegpunkt (44) zu bewegen,
- Initiieren einer Datenübertragung von der ersten Robotereinheit zur zweiten Robotereinheit über die dritte Robotereinheit.

2. Verfahren zum Austauschen von Daten innerhalb eines Robotersystems nach Anspruch 1, wobei das Verfahren die Schritte umfasst:
- Überprüfen, ob die erste und die zweite Robotereinheit (2, 5) durch die Nahbereichskommunikationsreichweite der dritten Robotereinheit (3) an dem Wegpunkt (44) abdeckbar sind, und
- Anweisen der dritten Robotereinheit (3), sich zu dem Wegpunkt (44) zu bewegen, wenn die erste und die zweite Robotereinheit (2, 5) durch die Nahbereichskommunikationsreichweite der dritten Robotereinheit (3) an dem Wegpunkt (44) abdeckbar sind.

3. Verfahren zum Austauschen von Daten innerhalb eines Robotersystems nach Anspruch 2, wobei das Verfahren den Schritt umfasst:
- Bestimmen mindestens eines Zielbereichs (33) innerhalb der Nahbereichskommunikationsreichweite der ersten und/oder der zweiten Robotereinheit (2, 5), wenn sich die erste und die zweite Robotereinheit (2, 5) außerhalb der Nahbereichskommunikationsreichweite der dritten Robotereinheit (3) an dem Wegpunkt (44) befinden.

4. Verfahren zum Austauschen von Daten innerhalb eines Robotersystems nach einem der vorhergehenden Ansprüche, wobei das Verfahren die Schritte umfasst:
- Bestimmen einer Robotereinheit (20) der mindestens drei Robotereinheiten (1, 2, 3, 4, 5, 20) zum Übertragen von Daten mit der ersten Robotereinheit (2), wobei die Nahbereichskommunikationsreichweite der Robotereinheit (20) und die Nahbereichskommunikationsreichweite der ersten Robotereinheit (2) frei von einer Interferenz sind, und
- Bestimmen mindestens eines Zielbereichs (33, 34) innerhalb der Nahbereichskommunikationsreichweite der ersten Robotereinheit (2) und/oder der Robotereinheit (20), die für die Datenübertragung mit der ersten Robotereinheit (2) bestimmt ist.

5. Verfahren zum Austauschen von Daten innerhalb eines Robotersystems nach Anspruch 4, wobei das Robotersystem mindestens vier Robotereinheiten (1, 2, 3, 4, 5, 20) umfasst, wobei das Verfahren den Schritt umfasst:
- Bestimmen einer der mindestens vier Robotereinheiten (1, 2, 3, 4, 5, 20) mit Ausnahme der ersten Robotereinheit (2) und der Robotereinheit (20), die für die Datenübertragung mit der ersten Robotereinheit (2) bestimmt ist, wobei die eine Robotereinheit (5) in der Lage ist, den mindestens einen Zielbereich (33, 34) früher als die anderen Robotereinheiten (1, 3, 4) zu erreichen.

6. Verfahren zum Austauschen von Daten innerhalb eines Robotersystems nach einem der Ansprüche 3 bis 5, wobei das Verfahren den Schritt umfasst:
- Bestimmen von zwei Zielbereichen (33, 34), wobei beide Zielbereiche (33, 34) eine Form eines Kreissegments, insbesondere eine halbkreisförmige Form, aufweisen, wobei
- der eine Zielbereich (33) durch eine Nahbereichskommunikationsreichweite einer anderen Robotereinheit (20) als der andere Zielbereich (34) abgedeckt ist und
- der eine Zielbereich (33) in Richtung der Robotereinheit (2), deren Nahbereichskommunikationsreichweite den anderen Zielbereich (34) abdeckt, ausgerichtet ist.

7. Verfahren zum Austauschen von Daten innerhalb eines Robotersystems nach einem der vorhergehenden Ansprüche, wobei das Verfahren die Schritte umfasst:
- Bestimmen eines zweiten Wegpunkts (42) innerhalb des Interferenzbereichs (31) für eine zusätzliche Robotereinheit (4), bei dem die erste und die zweite Robotereinheit (2, 5) durch die Nahbereichskommunikationsreichweite der zusätzlichen Robotereinheit (4) abdeckbar sind,
- Überprüfen, ob eine vordefinierte Bedingung durch die dritte oder durch die zusätzliche Robotereinheit (3, 4) erfüllt ist, und
- Anweisen der dritten Robotereinheit (3), sich zu dem Wegpunkt (44) zu bewegen, wenn die Bedingung durch die dritte Robotereinheit (3) erfüllt ist.

8. Verfahren zum Austauschen von Daten innerhalb eines Robotersystems nach einem der vorhergehenden Ansprüche, wobei jede Robotereinheit eine zweite Kommunikationsvorrichtung (12, 22) mit einer Fernkommunikationsreichweite, die größer als die Nahbereichskommunikationsreichweite ist, umfasst, wobei insbesondere die Fernbereichskommunikationsreichweite ein Feld (7) vollständig abdeckt und wobei eine Robotereinheit (20) als eine Logistikeinheit (20) konfiguriert ist, um die anderen Robotereinheiten durch Senden von Befehlen über die zweite Kommunikationsvorrichtung (22) anzuweisen.

9. Verfahren zum Austauschen von Daten innerhalb eines Robotersystems nach Anspruch 8, wobei das Verfahren den Schritt umfasst:
- Empfangen von Daten, die von der ersten Robotereinheit (2) über die zweite Kommunikationsvorrichtung (12) mit der Fernkommunikationsreichweite an die Logistikeinheit (20) gesendet werden, wobei die Daten Informationen über die Erkennung einer Notwendigkeit einer Datenübertragung, insbesondere eine Erkennung von unzureichendem freiem Pufferraum der ersten Robotereinheit (2), enthalten.

10. Verfahren zum Austauschen von Daten innerhalb eines Robotersystems nach einem der vorhergehenden Ansprüche, wobei das Verfahren den Schritt umfasst:
- Erkennen einer Notwendigkeit einer Datenübertragung, wenn eine Schwelle von in dem Puffer (18) der ersten Robotereinheit (2) gespeicherten Daten überschritten wird oder wenn zusätzliche Daten zu den in dem Puffer (18) der ersten Robotereinheit (2) gespeicherten benötigt werden, insbesondere wenn ein Datensatz, der einen Pfad zur Führung der ersten Robotereinheit (2) und Aufgaben, die dem Pfad zur Definition des Feldbetriebs der ersten Robotereinheit (2) zugeordnet sind, enthält, fehlt.

11. Verfahren zum Austauschen von Daten innerhalb eines Robotersystems nach einem der vorhergehenden Ansprüche, wobei das Verfahren den Schritt umfasst:
- Detektieren eines Vorhandenseins einer Nahbereichskommunikationskette, die mindestens drei Robotereinheiten (2, 3, 5, 20) umfasst, wobei jede Robotereinheit durch die Nahbereichskommunikationsreichweite mindestens einer anderen Robotereinheit abgedeckt ist.

12. Verfahren zum Austauschen von Daten innerhalb eines Robotersystems nach Anspruch 11, wobei das Verfahren die Schritte umfasst:
- Bestimmen einer Robotereinheit (20) der mindestens drei Robotereinheiten (2, 3, 5, 20) zum Übertragen von Daten mit der ersten Robotereinheit (2),
- Bestimmen einer Rangfolge der Robotereinheiten, die Teil der Nahbereichskommunikationskette sind, wobei die erste Robotereinheit (2) und die Robotereinheit (20), die für die Datenübertragung mit der ersten Robotereinheit (2) bestimmt ist, die Robotereinheiten der höchsten und niedrigsten Ränge repräsentieren, und die anderen Robotereinheiten (3, 5), die Teil der Nahbereichskommunikationskette sind, Robotereinheiten der mittleren Ränge repräsentieren, wobei
- die Nahbereichskommunikationsreichweite jeder Robotereinheit eines Zwischenrangs mindestens zwei andere Robotereinheiten, die Teil der Nahbereichskommunikationskette sind, umfasst.

13. Verfahren zum Austauschen von Daten innerhalb eines Robotersystems nach Anspruch 12, wobei das Verfahren die Schritte umfasst:
- Initiieren einer Datenübertragung zwischen der Robotereinheit des höchsten Rangs (2) und der Robotereinheit des niedrigsten Rangs (20), nachdem die Daten aller Robotereinheiten eines Zwischenrangs an die Robotereinheit des niedrigsten Rangs (20) übertragen wurden, durch Senden der Daten einer Robotereinheit eines höheren Rangs an eine Robotereinheit eines niedrigeren Rangs.

14. Verfahren zum Austauschen von Daten innerhalb eines Robotersystems nach Anspruch 12 oder 13, wobei das Verfahren die Schritte umfasst
- Initiieren einer Datenübertragung zwischen der Robotereinheit des niedrigsten Rangs (20) und der Robotereinheit des höchsten Rangs (2), nachdem die Puffer aller Robotereinheiten eines Zwischenrangs freigegeben wurden.

15. Steuerung (19, 29), die dazu ausgelegt ist, das Verfahren nach einem der Ansprüche 1 bis 14 auszuführen.

## Revendications

1. Procédé pour échanger des données à l'intérieur d'un système robotique, le système robotique comprenant au moins trois unités robotiques (1, 2, 3, 4, 5, 20), chaque unité robotique comprenant un premier dispositif de communication (11, 21) avec une portée de communication à courte distance pour échanger des données mutuellement avec d'autres unités et un dispositif de stockage données (18, 21), le procédé comprenant les étapes suivantes :
- reconnaître une nécessité d'un transfert de données pour une première unité robotique (2) des au moins trois unités robotiques (1, 2, 3, 4, 5, 20),
- déterminer une zone de brouillage (31) de la portée de communication à courte distance de la première unité robotique (2) et de la portée de communication à courte distance d'une deuxième unité robotique (5) des au moins trois unités robotiques (1, 2, 3, 4, 5, 20), la deuxième unité robotique (5) étant en dehors de la portée de communication à courte distance de la première unité robotique (2),
- déterminer un point de cheminement (44) à l'intérieur de la zone de brouillage (31) pour une troisième unité robotique (3) des au moins trois unités robotiques (1, 2, 3, 4, 5, 20), et
- commander la troisième unité robotique (3) pour qu'elle se déplace jusqu'au point de cheminement (44),
- amorcer un transfert de données depuis la première unité robotique à la deuxième unité robotique par l'intermédiaire de la troisième unité robotique.

2. Procédé pour échanger des données à l'intérieur d'un système robotique tel que revendiqué dans la revendication 1, le procédé comprenant les étapes suivantes :
- contrôler si les première et deuxième unités robotiques (2, 5) sont couvrables par la portée de communication à courte distance de la troisième unité robotique (3) au point de cheminement (44), et
- commander la troisième unité robotique (3) pour qu'elle se déplace jusqu'au point de cheminement (44) si les première et deuxième unités robotiques (2, 5) sont couvrables par la portée de communication à courte distance de la troisième unité robotique (3) au point de cheminement (44).

3. Procédé pour échanger des données à l'intérieur d'un système robotique tel que revendiqué dans la revendication 2, le procédé comprenant l'étape suivante :
- déterminer au moins une zone cible (33) à l'intérieur de la portée de communication à courte distance de la première et / ou de la deuxième unité robotique (2, 5) si la première et la deuxième unité robotique (2, 5) seront en dehors de la portée de communication à courte distance de la troisième unité robotique (3) au point de cheminement (44).

4. Procédé pour échanger des données à l'intérieur d'un système robotique tel que revendiqué dans une quelconque revendication précédente, le procédé comprenant les étapes suivantes :
- déterminer une unité robotique (20) des au moins trois unités robotiques (1, 2, 3, 4, 5, 20) pour transférer des données avec la première unité robotique (2), dans lequel la portée de communication à courte distance de l'unité robotique (20) et la portée de communication à courte distance de la première unité robotique (2) sont dépourvues d'un brouillage, et
- déterminer au moins une zone cible (33, 34) à l'intérieur de la portée de communication à courte distance de la première unité robotique (2) et / ou de l'unité robotique (20) déterminée pour le transfert de données avec la première unité robotique (2).

5. Procédé pour échanger des données à l'intérieur d'un système robotique tel que revendiqué dans la revendication 4, dans lequel le système robotique comprend au moins quatre unités robotiques (1, 2, 3, 4, 5, 20), le procédé comprenant l'étape suivante :
- déterminer une des au moins quatre unités robotiques (1, 2, 3, 4, 5, 20) à l'exception de la première unité robotique (2) et de l'unité robotique (20) déterminée pour le transfert de données avec la première unité robotique (2), dans lequel l'une unité robotique (5) est capable d'atteindre l'au moins une zone cible (33, 34) antérieurement aux autres unités robotiques (1, 3, 4).

6. Procédé pour échanger des données à l'intérieur d'un système robotique tel que revendiqué dans l'une des revendications 3 à 5, le procédé comprenant l'étape suivante :
- déterminer deux zones cibles (33, 34), les deux zones cibles (33, 34) ayant une forme d'un segment circulaire, particulièrement une forme semi-circulaire, dans lequel
- l'une zone cible (33) est couverte par une portée de communication à courte distance d'une unité robotique (20) différente de celle de l'autre zone cible (34) et
- l'une zone cible (33) est orientée vers l'unité robotique (2) dont la portée de communication à courte distance couvre l'autre zone cible (34).

7. Procédé pour échanger des données à l'intérieur d'un système robotique tel que revendiqué dans une quelconque revendication précédente, le procédé comprenant les étapes suivantes :
- déterminer un second point de cheminement (42) à l'intérieur de la zone de brouillage (31) pour une unité robotique supplémentaire (4) auquel les première et deuxième unités robotiques (2, 5) sont couvrables par la portée de communication à courte distance de l'unité robotique supplémentaire (4),
- contrôler si une condition prédéfinie est remplie par la troisième ou par l'unité robotique supplémentaire (3, 4), et
- commander la troisième unité robotique (3) pour qu'elle se déplace jusqu'au point de cheminement (44) si la condition est remplie par la troisième unité robotique (3).

8. Procédé pour échanger des données à l'intérieur d'un système robotique tel que revendiqué dans une quelconque revendication précédente, dans lequel chaque unité robotique comprend un second dispositif de communication (12, 22) avec une portée de communication à longue distance plus grande que la portée de communication à courte distance, dans lequel, particulièrement, la portée de communication à longue distance couvre un champ (7) complètement, et dans lequel une unité robotique (20) est configurée sous forme d'unité logistique (20) pour commander les autres unités robotiques en envoyant des commandes par l'intermédiaire du second dispositif de communication (22).

9. Procédé pour échanger des données à l'intérieur d'un système robotique tel que revendiqué dans la revendication 8, dans lequel le procédé comprend l'étape suivante :
- recevoir des données envoyées depuis la première unité robotique (2) à l'unité logistique (20) par l'intermédiaire du second dispositif de communication (12) avec la portée de communication à longue distance, les données contenant des informations de la reconnaissance d'une nécessité d'un transfert de données, en particulier une détection d'espace de mémoire tampon libre insuffisant de la première unité robotique (2).

10. Procédé pour échanger des données à l'intérieur d'un système robotique tel que revendiqué dans une quelconque revendication précédente, dans lequel le procédé comprend l'étape suivante :
- reconnaître une nécessité d'un transfert de données si un seuil de données stockées dans la mémoire tampon (18) de la première unité robotique (2) est dépassé, ou si des données supplémentaires à celles stockées dans la mémoire tampon (18) de la première unité robotique (2) sont requises, particulièrement si un jeu de données contenant un chemin pour guider la première unité robotique (2) et des tâches attribuées au chemin pour définir l'opération de champ de la première unité robotique (2) est manquant.

11. Procédé pour échanger des données à l'intérieur d'un système robotique tel que revendiqué dans une quelconque revendication précédente, dans lequel le procédé comprend l'étape suivante :
- détecter une présence d'une chaîne de communication à courte distance comprenant au moins trois unités robotiques (2, 3, 5, 20) dans lequel chaque unité robotique est couverte par la portée de communication à courte distance d'au moins une autre unité robotique.

12. Procédé pour échanger des données à l'intérieur d'un système robotique tel que revendiqué dans la revendication 11, dans lequel le procédé comprend les étapes suivantes :
- déterminer une unité robotique (20) des au moins trois unités robotiques (2, 3, 5, 20) pour transférer des données avec la première unité robotique (2),
- déterminer un ordre de rang des unités robotiques faisant partie de la chaîne de communication à courte distance, dans lequel la première unité robotique (2) et l'unité robotique (20) déterminée pour le transfert de données avec la première unité robotique (2) représentent les unités robotiques des rangs le plus haut et le plus bas, et les autres unités robotiques (3, 5) faisant partie de la chaîne de communication à courte distance représentent des unités robotiques de rangs intermédiaires, dans lequel
- la portée de communication à courte distance de chaque unité robotique d'un rang intermédiaire couvre au moins deux autres unités robotiques faisant partie de la chaîne de communication à courte distance.

13. Procédé pour échanger des données à l'intérieur d'un système robotique tel que revendiqué dans la revendication 12, dans lequel le procédé comprend les étapes suivantes :
- amorcer un transfert de données entre l'unité robotique du rang le plus haut (2) et l'unité robotique du rang le plus bas (20) après que les données de toutes les unités robotiques d'un rang intermédiaire ont été transférées à l'unité robotique du rang le plus bas (20) en envoyant les données d'une unité robotique d'un rang plus haut à une unité robotique d'un rang plus bas.

14. Procédé pour échanger des données à l'intérieur d'un système robotique tel que revendiqué dans la revendication 12 ou 13, dans lequel le procédé comprend les étapes suivantes
- amorcer un transfert de données entre l'unité robotique du rang le plus bas (20) et l'unité robotique du rang le plus haut (2) après que les mémoires tampons de toutes les unités robotiques d'un rang intermédiaire ont été libérée.

15. Contrôleur (19, 29) configuré pour exécuter le procédé tel que revendiqué dans l'une des revendications 1 à 14.
